# EUROPÄISCHE PATENTSCHRIFT

(11) **EP 1 412 179 B1**
(45) Veröffentlichungstag und Bekanntmachung des Hinweises auf die Patenterteilung: **04.01.2006**
(21) Anmeldenummer: 02769107.0
(22) Anmeldetag: 25.04.2002
(51) Int. Cl.: B32B 27/00, A47B 96/20

(54) **MEHRSCHICHTIGE, IM WESENTLICHEN POLYVINYLCHLORID- UND POLYOLEFINFREIE MÖBELVERBUNDFOLIE**
MULTILAYER, COMPOUND FOIL FOR FURNITURE SUBSTANTIALLY FREE FROM POLYVINYL CHLORIDE AND POLYOLEFINS
FEUILLE COMPOSITE MULTICOUCHE POUR MOBILIER, SENSIBLEMENT EXEMPTE DE POLYCHLORURE DE VINYLE ET DE POLYOLEFINE

(30) Priorität: 10.05.2001 AT 7422001
(43) Veröffentlichungstag der Anmeldung: 28.04.2004
(73) Patentinhaber: SENOPLAST KLEPSCH & CO.GMBH & CO.KG, 5721 Piesendorf (AT)
(72) Erfinder: KAPPACHER, Johann, A-5721 Piesendorf (AT); BERNSTEINER, Erich, A-5721 Piesendorf (AT); HÖLLEBAUER, Andreas, A-5722 Niedersill (AT)
(74) Vertreter: Torggler, Paul Norbert
(86) Internationale Anmeldenummer: PCT/AT2002/000129
(87) Internationale Veröffentlichungsnummer: WO 2002/090109

(56) Entgegenhaltungen:
- EP-A- 0 283 861
- EP-A- 0 987 102
- DE-A- 2 730 899
- DE-U- 20 022 048
- PATENT ABSTRACTS OF JAPAN vol. 2000, no. 11, 3. Januar 2001 (2001-01-03) & JP 2000 233480 A (C I KASEI CO LTD), 29. August 2000 (2000-08-29)

## Beschreibung

Die vorliegende Erfindung betrifft eine mehrschichtige, im wesentlichen polyvinylchlorid- und polyolefinfreie Verbundfolie, insbesondere Möbelfolie, mit mindestens einer zweischichtigen, coextrudierten Trägerschicht, welche ABS, insbesondere ABS mit Zumischungen, und/oder Polystyrol, insbesondere Polystyrol mit Zumischungen und/oder hochschlagfestes Polystyrol, und/oder Polyester, insbesondere amorphes Polyester Copolymer aufweist.

Beim Einsatz von thermoplastischen Dekorfolien im Möbelbereich werden insbesondere bei Hochglanzoberflächen hohe Anforderungen an die Kratzfestigkeit, die Abriebsfestigkeit, die chemische Beständigkeit, Spannungsrißbeständigkeit und an optische Werte wie Glanz, Lang- und Kurzwelligkeit sowie Oberflächenfeinrauhigkeit gestellt. In zunehmenden Maße dringt auch der Umweltgedanke in den Möbelbereich vor, wodurch noch zusätzlich Anforderungen an die Materialbeschaffenheit der thermoplastischen Folien gestellt werden. Die derzeit eingesetzten Verfahren bzw. Werkstoffe erfüllen diese Bedingungen nicht immer.

Möbelfolien aus thermoplastischen Kunststoffen werden beispielsweise durch Lamination/Beschichtung einer dünnen Kratzfestschicht auf eine pigmentierte Polyvinylchlorid (PVC) Trägerfolie und anschließendem Auftragen einer Primerschicht an der Rückseite hergestellt. PVC-Trägerfolien erfüllen zwar weitgehend alle physikalischen und optischen Anforderungen, wie sie an Möbelfolien gestellt werden, andererseits gelten sie jedoch heutzutage als ökologisch bedenklich. Eine ökologisch günstigere Variante wurde im Markt eingeführt, in dem anstelle der pigmentierten PVC-Basisfolie eine Basisfolie aus pigmentiertem amorphem Polyester-Copolymer verwendet wird. Weitere Alternativen auf polyolefinischer Trägerbasis werden in der EP 0 987 102 A2 beschrieben, die eine Basis aus Polyethylen und neben der Kratzfestbeschichtung noch eine Overlayfolie aus transparentem amorphem Polyester Copolymer enthält. Weiters werden im Patent EP 0 704 482 B1 mehrere Aufbauten definiert, in welchen Polyolefine mit Polymeren anderer chemischer Klassen (Styrolcopolymere, Polymethacrylate) homogenisiert und zu Folien für Möbel und Möbelteile verarbeitet werden. In der EP 0 875 374 A2 wird ein Produkt beschrieben, für welches eine Trägerfolie bestehend aus Polyolefinen, ABS (=Acrylnitril-Butadien-Styrol-Copolymere), ASA (=Acrylnitril-Styrol-Acrylester-Copolymere), AES (=thermoplastisches Quatrupolymer aus Acrylnitril-Ethylen-Propylen-Styrol), PET (=Polyethylenterephtalat) oder einem amorphen Polyester mit einer Overlayfolie aus einem amorphen Polyester laminiert wird. In der Japanischen Schrift 08311301 A ist eine ABS Folie beschrieben, welcher als Verarbeitungshilfe für das Kalandrierverfahren ein definierter Zusatz von Polycaprolacton zugesetzt wird. Zusätzlich kann es auch noch 5 bis 50 Gewichtsprozent Methacrylatrohstoff enthalten.

DE 2730899 offenbart eine dekorative Möbel-Verbund folie und folgendem Aufbau : (i) Deckschicht aus thermoplastischen Polyester, ABS-Polymerisat oder PMMA (ii) Trägerschicht aus PVC oder Styrol-Polymerisat und (iii) eine optionale zwischenschicht zwischen (i) und (ii).

Außerdem sind coextrudierte Platten aus Polymethylmetacrylat (PMMA) und ABS als hochglänzende Folienwerkstoffe bekannt. Die Möbelfolien werden dabei durch Coextrusion über eine Breitschlitzdüse hergestellt. Eine Verarbeitungsvariante stellt das Thermoformen dieser Folien mit anschließendem Verkleben auf Holzfaserplatten dar. Eine weitere Verarbeitungsvariante stellt das Verkleben auf ebene Flächen und das Heißkanten dar. Generell erfolgt die Verarbeitung der thermoplastischen hochglänzenden Möbelfolien und -matten über Verpressen, Laminieren oder Formen auf Holz- oder Schaumkerne. Um die Folien auf den bestehenden Maschinen verarbeiten zu können, müssen die Folien definierte technische Bedingungen erfüllen. So sollten sie vor allem unter anderem eine gute Thermoformbarkeit schon bei niedrigen Temperaturen (100°C) und ein entsprechendes Verarbeitungsfenster von 90 bis 120°C aufweisen. Zusätzlich sollte die Folie verbesserte Oberflächeneigenschaften (Glanz, Longwave, Shortwave, UV- (=ultraviolettes Licht) Beständigkeit, Kratzfestigkeit, Chemikalienbeständigkeit) sowie gute Haftungseigenschaften auf Holzwerkstoffen, Holzteilen oder Schaumkernen besitzen. Diese Anforderungen werden von den aus ökologischer Sicht anzustrebenden PVC-freien Folien beim Stand der Technik nur teilweise oder gar nicht erfüllt.

Aufgabe der Erfindung ist es somit, eine Verbundfolie zu schaffen, welche zum einen eine ökologisch sinnvolle, definierte Oberflächenqualitäten aufweisende, Alternative zu den bisher beim Stand der Technik im wesentlichen verwendeten PVC basierten Folien bietet und zum anderen die oben genannten technischen Anforderungen erfüllt.

Dies wird erfindungsgemäß dadurch erreicht, daß bei der einachsigen Zugprüfung eines aus der Verbundfolie bestehenden Prüfkörpers eine maximale Zugkraft zwischen 30 Newton und 280 Newton auftritt, wobei die einachsige Zugprüfung folgender Prüfvorschrift genügt:
a) Ein Prüfkörper gemäß Typ 1 B nach ISO 527-2: 1996 Abschnitt 6 mit einer Dicke, welche der Dicke der zu prüfenden Verbundfolie entspricht, wird vor Prüfbeginn 24 h bei 23°C und 50% relativer Luftfeuchte gelagert;
b) anschließend erfolgt die Einspannung, des so vorbehandelten Prüfkörpers in ein Prüfgerät nach ISO 527-1:1996 Abschnitt 5, wobei die Längsachse des Prüfkörpers parallel zur Extrusions- oder Kalandrierrichtung der Verbundfolie liegt, sowie das Aufbringen der Vorspannung nach ISO 527-1:1996 Abschnitt 9.2 und 9.5;
c) die anschließende Durchführung des einachsigen Zugversuchs erfolgt nach ISO 527-1:1996 mit einer konstanten Prüfgeschwindigkeit von 800 mm/min und bei einer konstanten Temperatur von 80°C, wobei zeitlich unmittelbar vor dem Beginn der Durchführung der Zugprüfung der eingespannte Prüfkörper in einer auf 80°C temperierten Klimakammer für einen Zeitraum von 10 Minuten verweilt,
d) während der Durchführung des Zugversuches erfolgt die Aufzeichnung der auftretenden Zugkräfte in Abhängigkeit der Prüfzeit ab Beginn der Prüfung in einem Bereich der nominellen Dehnung εₜ (nach ISO 527-1:1996 Abschnitt 10.2) zwischen 0% und 100%.

Neben den oben genannten Oberflächeneigenschaften ist es bei den erfindungsgemäßen Verbundfolien besonders wichtig, daß sie die Kriterien der Thermoformbarkeit in den oben genannten Temperaturbereichen erfüllen. Die Thermoformbarkeit der Verbundfolien ist für Ihre spätere Verwendung in der Möbelindustrie als Möbelfolien von zentraler Bedeutung. Unter Thermoformbarkeit wird hierbei vor allem verstanden, daß die Verbundfolien mit Verfahren nach dem Stand der Technik genau an den Oberflächenverlauf des zu beschichtenden Möbelstücks angepaßt werden können. Kritische Stellen beim Aufbringen solcher Verbundfolien sind vor allem Ecken, Kanten, Vertiefungen usw. im Möbelstück. Hierbei ist es entscheidend, daß die Verbundfolien möglichst exakt auch an kleine Ecken, Radien und Kanten angepaßt werden können.

Hierbei wurde erfindungsgemäß festgestellt, daß diejenigen Folien die geforderten Eigenschaften der Thermoformbarkeit aufweisen, welche eine einachsige Zugprüfung wie sie in dem Kennzeichen des Anspruchs 1 formuliert ist und weiter unten noch detaillierter ausgeführt ist, erfüllen. Bei der Zugprüfung ist es wichtig, daß der Testkörper vor der Durchführung der erfindungsgemäßen Zugprüfung nicht vorbelastet ist.

Bei den bevorzugten Ausführungsbeispielen ist vorgesehen, daß die Trägerschicht der Verbundfolie eine Stärke von 100 bis 1000 µm aufweist. Erfindungsgemäße Verbundfolien in diesem Stärkenbereich sind gut verarbeitbar. Des weiteren weisen sie die für die Qualitätsanforderungen notwendige Stärke auf.

Besonders günstige Ausführungsvarianten der Verbundfolien sehen vor, daß sie mindestens eine Trägerschicht mit amorphem Polyester Copolymer aufweist wobei bei der einachsigen Zugprüfung einer solchen Verbundfolie eine maximale Zugkraft zwischen 50 Newton und 120 Newton, vorzugsweise zwischen 65 Newton und 105 Newton auftritt. Bei diesen Folien ist es vorteilhaft, daß die Folie eine Stärke von 200 bis 600 µm, vorzugsweise von 300 bis 450 µm, aufweist. Eine andere günstige Gruppe von Verbundfolien sieht vor, daß sie mindestens eine Trägerschicht mit ABS und/oder Polystyrol, vorzugsweise HIPS (hochschlagfestes Polystyrol) aufweist wobei bei der einachsigen Zugprüfung einer solchen Verbundfolie eine maximale Zugkraft zwischen 50 Newton und 230 Newton, vorzugsweise zwischen 105 Newton und 230 Newton, auftritt. Besonders günstig ist es hierbei, daß bei der Zugprüfung einer solchen Verbundfolie eine maximale Zugkraft zwischen 105 Newton und 180 Newton auftritt. Darüber hinaus ist vorgesehen, daß diese Verbundfolien eine Stärke von 400 bis 1000 µm, vorzugsweise von 600 bis 800 µm, aufweisen,

Besonders bevorzugte Varianten der Verbundfolie weisen mindestens eine Trägerschicht aus ABS, insbesondere ABS mit Zumischungen und/oder Polystyrol, insbesondere Polystyrol mit Zumischungen und/oder hochschlagfestem Polystyrol, und/oder Polyester, insbesondere amorphem Polyester Copolymer auf. Hierbei ist vorgesehen, daß die Verbundfolie unter einer Deckschicht ein mindestens zweischichtiges Coextrudat als Trägerschicht aufweist. Dies stellt eine Grundkonstruktion der erfindungsgemäßen Folien dar, welche besonders gut die in dem oben beschriebenen Test geforderten Eigenschaften aufweist.

Bevorzugte Ausführungsbeispiele sehen vor, daß mindestens eine Trägerschicht der Verbundfolie UV-Stabilisatoren und/oder UV-Absorber und/oder Pigmente, vorzugsweise zur Einfärbung und in einem Volumenanteil zwischen 0,1 und 10% aufweisen. Durch diese Zumengung erreicht die Folie ihre gewünschten optischen Eigenschaften und erhält diese auch, wenn sie über viele Jahre hinweg Sonnenlicht ausgesetzt wird.

Bevorzugte Ausführungsbeispiele sehen darüber hinaus vor, daß die Trägerschicht und/oder mindestens eine Schicht der Trägerschicht Additive zur Vicaterniedrigung mit einem Gewichtsanteil von 1 bis 70% aufweisen. Eine Variante sieht vor, daß die Trägerschicht und/oder mindestens eine Schicht der Trägerschicht Polycaprolacton mit einem Gewichtsanteil von 0,5 bis 15 % aufweisen. Eine weitere Variante sieht vor, daß die Trägerschicht und/oder mindestens eine Schicht der Trägerschicht amorphes Polyester Copolymer mit einem Gewichtsanteil von 30 bis 70% aufweisen. Diese Zumischungen dienen vor allem dazu, die Verbundfolie mit überlegenen physikalischen Eigenschaften auszustatten.

Im Fall eines mehrschichtigen vorzugsweise eines zweischichtigen Aufbaus des Coextrudats der Trägerschicht sieht ein bevorzugtes Ausführungsbeispiel vor, daß die Trägerschicht in mindestens einer - vorzugsweise von der Deckschicht wegweisenden - Schicht Recyclat aus dem laufenden Produktionsprozeß aufweist.

Auf die der Deckschicht der Verbundfolie gegenüberliegende Trägerschichtseite kann eine Primerschicht aufgebracht sein. Diese dient der Verbindung der Verbundfolie mit dem Körper auf den sie aufgebracht wird.

Bevorzugte Ausführungsbeispiele sehen vor, daß im Falle ihres einschichtigen Aufbaus die Trägerschicht eine Stärke zwischen 94 und 98 % der Gesamtstärke der Verbundfolie aufweist.

Darüber hinaus ist in bevorzugten Ausführungsbeispielen vorgesehen, daß die Deckschicht der Verbundfolie mit der Trägerschicht zusammen coextrudiert wird und PMMA oder schlagzähmodifiziertes PMMA aufweist. Eine ausgewählte Gruppe von erfindungsgemäßen Verbundfolien sieht vor, daß die Verbundfolie eine Gesamtstärke von 500 bis 1000 µm, vorzugsweise von 500 bis 800 µm aufweist. Des weiteren ist bei ausgewählten Ausführungsbeispielen vorgesehen, daß die Deckschicht der Verbundfolie eine Schichtstärke zwischen 1 und 5 %, vorzugsweise im Intervall von 3 bis 4%, der Gesamtstärke der Verbundfolie aufweist.

Darüber hinaus ist bei ausgewählten Ausführungsbeispielen vorgesehen, daß im Falle einer zweischichtigen Trägerschicht, deren erste Schicht eine Stärke zwischen 5 und 20%, vorzugsweise zwischen 10 und 15%, der Gesamtstärke der Verbundfolie sowie die zweite Schicht der Trägerschicht eine Stärke zwischen 74 und 93%, vorzugsweise zwischen 75 und 85%, der Gesamtstärke der Verbundfolie aufweist.

Andere Ausführungsbeispiele sehen vor, daß als Deckschicht eine transparente Kratzfestbeschichtung auf die Trägerschicht auflaminiert oder per Thermotransferdruck aufgebracht ist. Bei dieser Gruppe der erfindungsgemäßen Verbundfolien ist vorgesehen, daß die Verbundfolie eine Gesamtstärke zwischen 200 bis 600 µm, vorzugsweise von 300 bis 450 µm, aufweist. Gegenüber den Verbundfolien, bei welchen im Coextrusionsverfahren die Deckschicht der Verbundfolie mit der Trägerschicht zusammen coextrudiert wird, ist hier somit eine dünnere Gesamtstärke der Verbundfolie erreichbar, wenn die Deckschicht auflaminiert wird.

Bei diesen Ausführungsbeispielen ist darüber hinaus vorgesehen, daß die Deckschicht der Verbundfolie eine Schichtstärke zwischen 1 und 5%, vorzugsweise zwischen 1 und 3% der Gesamtstärke der Verbundfolie aufweist.

Bevorzugte Ausführungsbeispiele sehen hierbei vor, daß im Fall einer zweischichtigen Trägerschicht, deren erste Schicht eine Stärke zwischen 20 und 40%, vorzugsweise zwischen 25 und 35%, der Gesamtstärke der Verbundfolie sowie die zweite Schicht der Trägerschicht eine Stärke zwischen 60 und 75% vorzugsweise zwischen 65 und 70% der Gesamtstärke der Verbundfolie aufweist.

Andere bevorzugte Ausführungsbeispiele sehen vor, daß als Deckschicht auf die Trägerschicht eine transparente Kratzfestbeschichtung durch Bedrucken oder Lackieren aufgebracht ist. Hierbei weisen die Verbundfolien eine Gesamtstärke von 200 bis 600 µm, vorzugsweise von 300 bis 450 µm auf. Darüber hinaus ist bei diesen Ausführungsbeispielen vorgesehen, daß die Deckschicht der Verbundfolie eine Schichtstärke zwischen 1 und 5%, vorzugsweise zwischen 1 und 3% der Gesamtstärke der Verbundfolie aufweist.

Im Falle einer zweischichtigen Trägerschicht der Verbundfolie ist bei ausgewählten Ausführungsbeispielen vorgesehen, daß deren erste Schicht eine Stärke zwischen 20 und 40%, vorzugsweise zwischen 25 und 35%, der Gesamtstärke der Verbundfolie sowie die zweite Schicht der Trägerschicht eine Stärke zwischen 60 und 75% vorzugsweise zwischen 65 und 70% der Gesamtstärke der Verbundfolie aufweist.

Ein ausgewähltes Ausführungsbeispiel sieht darüber hinaus vor, daß die Trägerschicht eine zur Primerschicht weisende zusätzliche coextrudierte Schicht, vorzugsweise aus amorphen Polyester Copolymer mit Antiblocking Additiv, aufweist.

Ein anderes bevorzugtes Ausführungsbeispiel sieht vor, daß die Deckschicht mehrschichtig aufgebaut und als fertiges Vorprodukt auf die Trägerschicht auflaminiert ist. Hierbei ist in bevorzugter Weise vorgesehen, daß die Deckschicht vier Schichten aufweist, wobei die erste Schicht eine transparente Kratzfestbeschichtung, vorzugsweise mit UV-Stabilisatoren und/oder UV-Absorbem, die zweite Schicht eine transparente Overlayfolie bestehend aus amorphem Polyester Copolymer, vorzugsweise mit UV-Stabilisatoren und/oder UV-Absorbern, die dritte Schicht eine Dekorschicht und die vierte Schichte eine Primerschicht ist. Bei diesen Folien ist erfindungsgemäß vorgesehen, daß die Verbundfolie eine Gesamtstärke von 200 bis 600 µm vorzugsweise von 300 bis 450 µm aufweist. Darüber hinaus sehen erfindungsgemäße Ausführungsbeispiele hierbei vor, daß die Deckschicht eine Stärke von 30 bis 40% vorzugsweise 33 bis 37% der Gesamtstärke der Verbundfolie aufweist.

Andere erfindungsgemäße Ausführungsbeispiele sehen vor, daß die der Deckschicht gegenüberliegende Seite der Trägerschicht mindestens eine Dekorschicht und/oder mindestens eine Farbdeckschicht und/oder mindestens eine Primerschicht aufweist, wobei vorzugsweise die Deckschicht eine transparente Kratzfestbeschichtung mit UV-Stabilisatoren und/oder UV-Absorbern aufweist. Bei diesen bevorzugten Ausführungsbeispielen ist vorgesehen, daß die coextrudierte Trägerschicht mindestens 80% vorzugsweise 95% der Gesamtstärke der Verbundfolie aufweist. Darüber hinaus ist in bevorzugten Ausführungsbeispielen vorgesehen, daß die erste Schicht der Trägerschicht chemisch und/oder mechanisch mattiert ist.

Weitere Ausführungsbeispiele sehen vor, daß die Trägerschicht transparent ausgebildet ist. Bevorzugte Ausführungsbeispiele sehen darüber hinaus vor, daß die Dekor- und/oder Farbdeckschicht(en) im Kupfertiefdruck und/oder Flexodruck und/oder Siebdruck und/oder Offsetdruck auf die Trägerschicht aufgebracht ist (sind). Durch das Aufbringen der Dekorschichten bzw. Farbdeckschichten auf der Seite der Trägerschicht, welche nach dem Aufbringen der Verbundfolie auf das Möbelstück zum Möbelstück zeigt, ist (sind) das Dekor bzw. die Farbdeckschichten durch die Trägerschicht besonders gut gegen Abrieb und Zerstörung bei Gebrauch des Möbelstücks geschützt.

Weitere Merkmale und Einzelheiten der vorliegenden Erfindung ergeben sich aus der nachfolgenden Figurenbeschreibung.

Dabei zeigt:
- Fig. 1: eine schematische Darstellung zum Prüfverfahren für erfindungsgemäße Verbundfolien,
- Fig. 2 bis Fig. 5: erfindungsgemäße Ausführungsbeispiele verschiedener Verbundfolien.

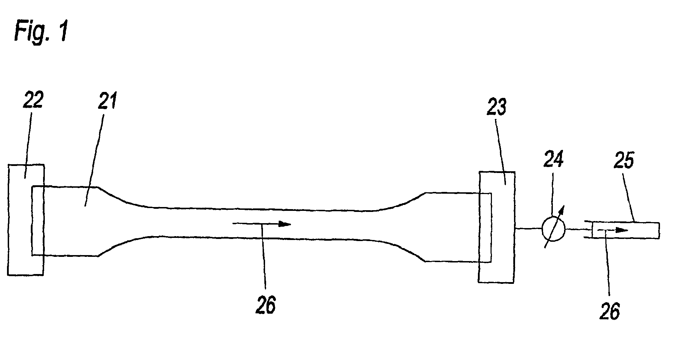

Das in Fig. 1 schematisch dargestellte Prüfverfahren dient der Erfassung des Verformungsverhaltens coextrudierter Verbundfolien im einachsigen Zugversuch zur Bestimmung der Verformbarkeit dieser Folien z.B. auf Membranpreßanlagen (= oft bei der Verarbeitung von Verbundfolien verwendeter Anlagentyp).

Erfindungsgemäß wird ein Zugversuch nach ISO 527-1:1996 bei einer definierten Prüftemperatur unter konstanter Prüfgeschwindigkeit durchgeführt. Hierbei wird der Verlauf der Prüfzugkraft, die zur Aufrechterhaltung der konstanten Prüfgeschwindigkeit während der gesamten Prüfdauer notwendig ist, in Abhängigkeit der Prüfzeit aufgezeichnet. Die während des Zugversuches maximal auftretende Zugkraft dient als Kriterium für die Verformbarkeit der Folien auf Membranpreßanlagen.

Fig. 1 zeigt schematisch den Prüfkörper 21, welcher zwischen den Einspannklemmen 22 und 23 eingespannt ist und in Richtung 26 mit einer konstanten Geschwindigkeit mit der Zugeinrichtung 25 gezogen und dadurch gedehnt wird. Die dabei an dem Prüfkörper auftretenden Zugkräfte werden mittels eines Kraftmessers 24 in Abhängigkeit von der Zeit aufgezeichnet. Die nominelle Dehnung wird durch geeignete Mittel (hier nicht dargestellt) gemäß ISO 527-1:1996 gemessen.

Das Prüfgerät, das für die Verformungsversuche eingesetzt wird, muß die in ISO 527-1:1986 Abschnitt 5 definierten Bedingungen erfüllen.

Für die Zugversuche wird ein Prüfkörper Typ 1B nach ISO 527-2: 1996, Abschnitt 6 verwendet. Die Entnahme der Prüfkörper aus der zu prüfenden Verbundfolie soll derart erfolgen, daß die Längsachse des Prüfkörpers parallel zur Extrusionsrichtung oder Kalandrierrichtung liegt. Die Herstellung der Prüfkörper muß durch Fräsen der Folien mit Hilfe einer geeigneten Frässchablone erfolgen. Die Ränder der gefrästen Prüfkörper müssen frei von Rissen oder Fräsgraten sein. Im Bedarfsfall müssen die gefrästen Prüfkörper noch in der Schablone mittels Zuhilfenahme eines Schleifpapiers (internationale Korngröße 220) an den Rändern fein geschliffen werden.

Da bei jeder Messung bzw. Prüfung eine gewisse Streuung der Meßwerte zu erwarten ist, ist die Durchführung der Zugprüfung an mehreren Prüfkörpern von ein und derselben Verbundfolie durchzuführen, wobei der arithmetische Mittelwert unter Berücksichtigung der Standardabweichung im erfindungsgemäßen Wertebereich liegen muß.

Die Wahl der Anzahl der Prüfkörper erfolgt in Anlehnung an ISO 527-1: 1996, Abschnitt 7.1, wobei in dieser Prüfvorschrift nur eine Prüfrichtung gefordert ist (parallel zur Extrusionsrichtung).

In Anlehnung an ISO 527-1:1996, Abschnitt 7.2 und 7.3 müssen Prüfkörper, die im Schulterbereich brechen oder sich in den Schulterbereich hinein verstrecken, verworfen werden. Prüfkörper, die aus der Einspannklemme gerutscht sind, oder bei denen ein offensichtlicher Fehler zu einem vorzeitigen Versagen geführt hat, dürfen ebenfalls nicht in die Auswertung aufgenommen werden. Es müssen Wiederholungsprüfungen mit einer entsprechenden Anzahl an neuen Prüfkörpern durchgeführt werden.

Die Prüfkörper werden vor Durchführung der Zugprüfung in Anlehnung an ISO 291 ("Kunststoffe-Normalklimate für Konditionierung und Prüfung") 24 Stunden bei 23°C Raumtemperatur und einer relativen Luftfeuchtigkeit von 50% gelagert.

Die Durchführung des erfindungsgemäßen Tests erfolgt bei erhöhter Temperatur T₁= 80°C. Hierfür muß das Prüfgerät mit einer entsprechenden Klimakammer ausgerüstet sein. Die, wie oben geschildert vorbehandelten Prüfkörper werden im Prüfgerät eingespannt, und für 10 Minuten in der , auf 80°C temperierten Klimakammer erwärmt. Nach Ablauf dieser Zeitspanne wird die Zugprüfung gestartet.

Die Maße der Prüfkörper, das Einspannen der Prüfkörper sowie das Aufbringen der Vorspannung erfolgt nach ISO 527-1:1996, Abschnitte 9.2 bis 9.5.

Die Zugprüfung erfolgt geschwindigkeitsgesteuert mit einer, für die Dauer der Zugprüfung konstanten Prüfgeschwindigkeit von 800 mm/min.

Die zu jedem Zeitpunkt aktuelle Zugkraft ist bei dieser Prüfmethode variabel und ergibt sich nach dem Anlegen der konstanten Prüfgeschwindigkeit aus dem zeitlich veränderlichen Dehnungswiderstand des Prüfkörpers.

Die Auswertung und Darstellung der Prüfergebnisse erfolgt nach ISO 527-1: 1996, Abschnitt 10.

Es können sowohl Spannungs- Dehnungsdiagramme (vgl. ISO 527-1:1996, Bild 1) als auch Zugkraft/Dehnungsdiagramme zur Auswertung des Zugversuches herangezogen werden. Der Zusammenhang zwischen Zugspannung und Zugkraft kann aus ISO 527-1:1996, Abschnitt 10.1 entnommen werden.

Die Auswertung des Zugversuches erfolgt innerhalb eines Dehnungsbereiches von 0% bis 100%, wobei in diesem Fall die nominelle Dehnung εₜ des Probekörpers, wie in ISO 527-1:1996, Abschnitt 10.2 definiert, herangezogen wird.

Der Prüfbericht muß alle Angaben enthalten, die in ISO 527-1:1996, Abschnitt 12 vorgesehen sind.

Im Ergebnis müssen die Prüfkörper, die aus den diesem Patent entsprechenden Folien entnommen wurden, im oben beschriebenen Zugversuch innerhalb eines nominellen Dehnungsbereiches von 0 bis 100 % eine maximal auftretende Zugkraft aufweisen, die zumindest im Bereich zwischen 30 und 280 Newton (N) liegt. Eine weitere Unterteilung dieses geforderten Zugkraftintervalls für spezielle Folientypen ist weiter oben angegeben.

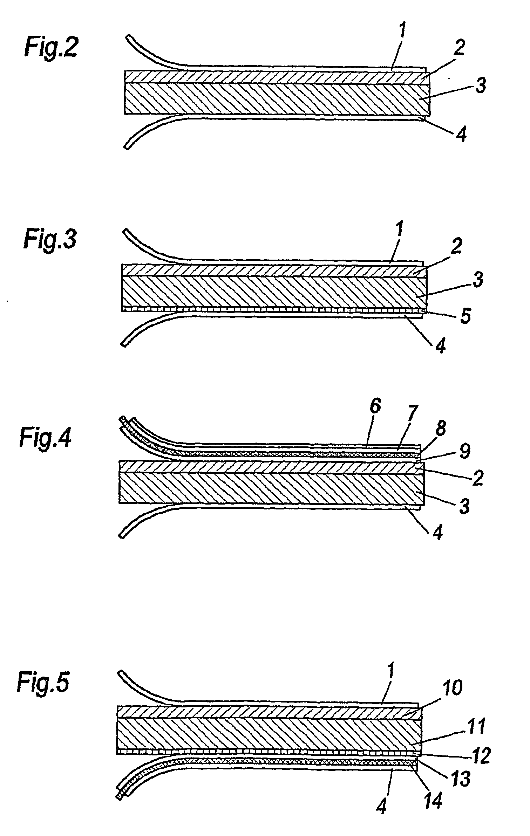

Fig. 2 zeigt eine schematische Darstellung des Schichtaufbaus der Ausführungsbeispiele der Verbundfolie A1 bis A7.

Der konkrete Schichtaufbau dieser Ausführungsbeispiele sowie die prozentualen Stärkenanteile der Schichten 1 bis 4 sowie Zusatzstoffe in den einzelnen Schichten und Bemerkung zu den Schichten sind der folgenden Auflistung zu entnehmen:

### A1 - Coextrudat - Gesamtstärke 0,75mm

- Schicht 1 - Stärke: 4% PMMA + vorzugsweise 0,1 - 3% Pigmente zur Einfärbung + UV Stabilisierung vorzugsweise bestehend aus UV-Stabilisatoren und/oder UV-Absorbern
   oder: PMMA + UV Stabilisierung
- Schicht 2 - Stärke: 15% ABS + 0,5 - 10% Pigmente zur Einfärbung + ggfls. UV-Stabilisierung
   oder: ABS + 0,5 - 10% Pigmente + gegebenenfalls UV-Stabilisierung + gegebenenfalls Additiv zur Vicaternierdrigung: 10% Polycaprolacton oder 50% amorphes Polyester Copolymer
- Schicht 3 - Stärke: 80% ABS + 0,5 - 10% Pigmente zur Einfärbung
   oder: ABS + 0,5 - 10% Pigmente + Additiv zur Vicaterniedrigung: 10% Polycaprolacton oder 50% amorphes Polyester Copolymer + Recyclat aus laufendem Produktionsprozeß
- Schicht 4 - Stärke: 1 % Primer (wird durch Bedrucken aufgebracht).
Bemerkungen: - Die Schichten 2 und 3 sind die Trägerschicht
- Die Schichten 1 bis 3 werden im Coextrusionsverfahren gefertigt
- Schicht 1 ist die Deckschicht
- In der Schicht 1 kann sowohl impactmodifiziertes als auch Standard- PMMA verwendet werden.
- Die Schicht 2 kann entfallen, wird in der Regel aber gefertigt.

### A2 - Coextudat - Gesamtstärke 0,75 mm

- Schicht 1 - Stärke: 4% PMMA + 0,1 - 3% Pigmente zur Einfärbung + UV Stabilisierung vorzugsweise bestehend aus UV-Stabilisatoren und/oder UV-Absorbern
   oder: PMMA + UV Stabilisierung
- Schicht 2 - Stärke: 15% HIPS (=hochschlagfestes Polystyrol) + 0,5 - 10% Pigmente zur Einfärbung + ggfls. UV-Stabilisierung
   oder: HIPS + 0.5 - 10% Pigmente + gegebenenfalls UV-Stabilisierung + gegebenenfalls Additiv zur Vicaterniedrigung: 2% Polycaprolacton oder 50% Amorphes Polyester Copolymer
- Schicht 3 - Stärke: 80% HIPS + 0,5 - 10% Pigmente zur Einfärbung + Recyclat aus laufendem
   Produktionsprozeß
   oder: HIPS + 0,5 - 10% Pigmente + Additiv zur Vicaterniedrigung: 2% Polyceprolacton oder 50% Amorphes Polyester Copolymer + Recyclat
   aus laufendem Produktionsprozeß
- Schicht 4 - Stärke: 1% Primer (wird durch Bedrucken aufgebracht)
Bemerkungen: - Die Schichten 2 und 3 sind die Trägerschicht
- Die Schichten 1 bis 3 werden im Coextrusionsverfahren gefertigt.
- Schicht 1 ist die Deckschicht.
- In der Schicht 1 kann sowohl impactmodifiziertes als auch Standard-PMMA verwendet werden.
- Die Schicht 2 kann entfallen, wird in der Regel aber gefertigt.

### A3 - Coextrudat - Gesamtstärke 0.75mm

- Schicht 1 - Stärke: 4 % PMMA + 0,1 - 3% Pigmente zur Einfärbung + UV Stabilisierung vorzugsweise bestehend aus UV-Stabilisatoren und/oder UV-Absorbem
   oder: PMMA + UV-Stabilisierung
- Schicht 2 - Stärke: 15% Amorphes Polyester Copolymer + 0,5 - 10% Pigmente Einfärbung + gegebenenfalls UV-Stabilisierung
- Schicht 3 - Stärke: 80% Amorphes Polyester Copolymer + 0,5 - 10% Pigmente Einfärbung + Recyclat aus laufendem Produktionsprozeß
- Schicht 4 - Stärke: 1 % Primer (wird durch Bedrucken aufgebracht)
Bemerkungen: - Die Schichten 2 und 3 sind die Trägerschicht
- Die Schichten 1 bis 3 werden im Coextrusionsverfahren gefertigt
- Schicht 1 ist die Deckschicht
- In der Schicht 1 kann sowohl impactmodifiziertes als auch Standard-PMMA verwendet werden.
- Die Schicht 2 kann entfallen, wird in der Regel aber gefertigt.

### A4 - Laminat - Gesamtstärke 0,40 mm:

- Schicht 1- Stärke: 2% Transparente Kratzfestbeschichtung + gegebenenfalls UV-Stabilisierung
- Schicht 2 - Stärke: 30% ABS + 0,5 - 10% Pigmente zur Einfärbung + gegebenenfalls UV Stabilisierung
   oder: ABS + 0,5 - 10% Pigmente + gegebenenfalls UV-Stabilisierung + gegebenenfalls Additiv
   zur Vicaterniedrigung: 10% Polycaprolacton oder 50% amorphes Polyester Copolymer
- Schicht 3 - Stärke: 67% ABS + 0,5 - 10% Pigmente zur Einfärbung
   oder: ABS + 0,5 - 10% Pigmente + Additiv zur Vicaterniedrigung: 10%
   Polycaprolacton oder 50% amorphes Polyester Copolymer + Recyclat
   aus laufendem Produktionsprozeß
- Schicht 4 - Stärke: 1 % Primer (wird durch Bedrucken aufgebracht)
Bemerkungen: - Die Schicht 1 wird durch Lamination oder Thermotransferdruck inline oder exline aufgebracht.
- Die Schichten 2-3 werden im Coextrusionsverfahren gefertigt und sind die Trägerschicht
- Die Schicht 2 kann entfallen, wird in der Regel aber gefertigt.

### A5 - Laminat - Gesamtstärke 0,40 mm:

- Schicht 1 - Stärke: 2% Transparente Kratzfestbeschichtung + ggfls. UV-Stabilisierung
- Schicht 2 - Stärke: 30% HIPS + 0,5 - 10% Pigmente zur Einfärbung + gegebenenfalls UV-Stabilisierung
   oder: HIPS + 0,5 - 10% Pigmente + gegebenenfalls UV-Stabilisierung
   + gegebenenfalls Additiv
   zur Vicaterniedrigung: 2% Polycaprolacton oder 50% amorphes Polyester Copolymer
- Schicht 3 - Stärke: 67% HIPS + 0,5 - 10% Pigmente zur Einfärbung
   oder: HIPS +0,5 - 10% Pigmente + Additiv zur Vicaterniedrigung: 2% Polycaprolacton oder 50% amorphes Polyester Copolymer + Recyclat
   aus laufendem Produktionsprozeß
- Schicht 4 - Stärke: 1 % Primer (wird durch Bedrucken aufgebracht)
Bemerkungen: - Die Schicht 1 wird durch Lamination oder
Thermotransferdruck
inline oder exline aufgebracht.
- Die Schichten 2 - 3 werden im Coextrusionsverfahren gefertigt und sind die Trägerschichten
- Die Schicht 2 kann entfallen, wird in der Regel aber gefertigt.

### A 6 - Lackierung - Gesamtstärke 0,40 mm

- Schicht 1 - Stärke: 2% Transparente Kratzfestbeschichtung + gegebenenfalls. UV-Stabilisierung
- Schicht 2 - Stärke: 30% ABS + 0,5 - 10% Pigmente zur Einfärbung + gegebenenfalls UV-Stabilisierung
   oder: ABS + 0,5 - 10% Pigmente + gegebenenfalls UV-Stabilisierung Additiv zur Vicaternierdrigung: 10% Polycaprolacton oder 50% amorphes Polyester Copolymer
- Schicht 3 - Stärke: 67% ABS + 0,5 - 10% Pigmente zur Einfärbung
   oder: ABS + 0,5 - 10% Pigmente + Additiv zur Vicatemiedrigung; 10% Polycarprolacton oder 50% amorphes Polyester Copolymer + Recyclat aus laufendem Produktionsprozeß
- Schicht 4 - Stärke: 1 % Primer (wird durch Bedrucken aufgebracht)
Bemerkungen: - Die Schicht 1 wird durch Bedrucken oder Lackieren aufgebracht.
- Die Schichten 2 - 3 werden im Coextrusionsverfahren gefertigt und sind die Trägerschicht.
- Die Schicht 2 kann entfallen, wird in der Regel aber gefertigt.

### A7 - Lackierung - Gesamtstärke 0,40 mm

- Schicht 1 - Stärke: 2% Transparente Kratzfestbeschichtung + gegebenenfalls UV-Stabilisierung
- Schicht 2 - Stärke: 30% HIPS + 0,5 - 10% Pigmente zur Einfärbung + gegebenenfalls UV-
   Stabilisierung
   oder: HIPS + 0,5 - 10% Pigmente + gegebenenfalls UV-Stabilisierung + Additiv zur Vicaterniedrigung: 2% Polycaprolacton oder 50% amorphes Polyester Copolymer
- Schicht 3 - Stärke: 67% HIPS + 0,5 - 10% Pigmente zur Einfärbung
   oder: HIPS + 0,5 - 10% Pigmente + Additiv zur Vicaterniedrigung; 2% Polycaprolacton oder 50 % amorphes Polyester Copolymer + Recyclat aus laufendem Produktionsprozeß
- Schicht 4 - Stärke: 1% Primer (wird durch bedrucken aufgebracht)
Bemerkungen: - Die Schicht 1 wird durch Lackieren oder Bedrucken aufgebracht.
- Die Schichten 2-3 werden im Coextrusionsverfahren gefertigt und sind die Trägerschicht.
- Die Schicht 2 kann entfallen, wird in der Regel aber gefertigt.

Fig. 3 zeigt eine erfindungsgemäße Verbundfolie, bei der die Trägerschicht dreischichtig aufgebaut ist. Der genaue Schichtaufbau ist z.B. wie folgt:

### A 8 Laminat - Gesamtstärke 0,40 mm:

- Schicht 1 - Stärke: 2% Transparente Kratzfestbeschichtung + gegebenenfalls UV-Stabilisierung (vorzugsweise bestehend aus UV-Stabilisatoren und/oder UV-Absorber)
- Schicht 2 - Stärke: 10% amorphes Polyester Copolymer + 0,5 - 10% Pigmente Einfärbung + gegebenenfalls UV-Stabilisierung (vorzugsweise bestehend aus UV-Stabilisatoren und/oder UV-Absorber) + gegebenenfalls Antiblocking-Additiv
- Schicht 3 - Stärke: 85% amorphes Polyester Copolymer + 0,5 - 10% Pigmente Einfärbung + Recyclat aus laufendem Produktionsprozeß
- Schicht 5 - Stärke: 2% amorphes Polyester Copolymer + Antiblocking Additiv
- Schicht 4 - Stärke 1 % Primer (wird durch Bedrucken aufgebracht)
Bemerkungen: - Die Schicht 1 wird durch Lamination oder
Thermotransferdruck inline oder exline aufgebracht.
- Die Schichten 2, 3 und 5 werden im Coextrusionsverfahren gefertigt und sind die Trägerschicht.

Fig. 4 zeigt den Aufbau einer erfindungsgemäßen Verbundfolie, bei der die Deckschicht mehrschichtig aufgebaut ist. Der genaue Schichtaufbau ist z.B. wie folgt:

### A 9 Laminat - Gesamtstärke 0,40 mm

- Schicht 6 - Stärke: 2% Transparente Kratzfestbeschichtung + gegebenenfalls UV-Stabilisierung
- Schicht 7 - Stärke: 30% Transparente Overlayfolie bestehend aus amorphem Polyester Copolymer + gegebenenfalls UV-Stabilisierung
- Schicht 8 - Stärke:1% Dekorschicht
- Schicht 9 - Stärke: 1 % Primer (wird durch Bedrucken aufgebracht).
- Schicht 2 - Stärke: 20% HIPS + 0,5 - 10% Pigmente zur Einfärbung + gegebenenfalls UV-
   Stabilisierung
   oder: HIPS + 0,5 - 10% Pigmente + gegebenenfalls UV-Stabilisierung + Additiv zur Vicaterniedrigung; 2 % Polycaprolacton oder 50% amorphes Polyester Copolymer
- Schicht 3 - Stärke: 45% HIPS + 0,5 - 10% Pigmente zur Einfärbung
   oder: HIPS + 0,5 -10% Pigmente + Additiv zur Vicatemiedrigung; 2% Polycaprolacton oder 50% amorphes Polyester Copolymer + Recyclat aus dem laufenden Produktionsprozeß
- Schicht 4 - Stärke: 1 % Primer (wird durch Bedrucken aufgebracht)
Bemerkungen: - Die Schicht 6 wird durch Bedrucken oder Lackieren auf die Schicht 7 aufgebracht.
- Die Schicht 7 kann chemisch und/oder mechanisch mattiert werden, wird im Extrusionsverfahren gefertigt.
- Schichten 8 und 9 werden aufgebracht durch Kupfertief-, Flexo-, Sieb-, oder Offsetdruck auf die Schicht 7
- Die Schichten 2-3 werden im Coextrusionsverfahren gefertigt und sind die Trägerschicht
- Die Schicht 2 kann entfallen, wird in der Regel aber gefertigt
- Der Gesamtaufbau ergibt sich durch Lamination oder Pressvorgang von Zwischenprodukt Schichten 6-9 (=Vorprodukt) mit dem vorher coextrudierten Zwischenprodukt aus den Schichten 2 und 3.
- Die Schicht 4 wird durch Druck auf das Gesamtlaminat aufgebracht.

Fig. 5 zeigt eine erfindungsgemäße Verbundfolie, deren Hauptcharakteristik ist, daß die Dekorschichten zwischen Trägerschicht und Primerschicht unter der Trägerschicht aufgebracht sind. Der genaue Schichtaufbau ist hierbei z.B. wie folgt:

### A 10 Lackierung - Gesamtstärke 0,40 mm

- Schicht 1 - Stärke: 2 % Transparente Kratzfestbeschichtung + ggfls. UV-Stabilisierung (vorzugsweise bestehend aus UV-Stabilisatoren und/oder UV-Absorber); (hochglanz-matt)
- Schicht 10 - Stärke: 10% amorphes Polyester Copolymer + Antiblocking-Additive + gegebenenfalls UV-Stabilisierung (vorzugsweise bestehend aus
   UV-
   Stabilisatoren und/oder UV-Absorber)
- Schicht 11 - Stärke: 83% amorphes Polyester Copolymer + Recyclat aus dem laufenden Produktionsprozeß
- Schicht 12 - Stärke: 2% amorphes Polyester Copolymer + Antiblocking Additive
- Schicht 13 - Stärke: 1 % Dekorschicht (z.B. Holzfaser)
- Schicht 14 - Stärke: 1 % Farbdeckschicht (z.B. Holzbraun)
- Schicht 4 - Stärke: 1 % Primer (wird durch Bedrucken aufgebracht)
Bemerkungen: - Schicht 10 kann chemisch und/oder mechanisch mattiert werden, wird im Extrusionsverfahren hergestellt.
- Die Schichten 10-12 werden im Coextrusionsverfahren gefertigt und sind die Trägerschicht.
- Die Schichten 13 und 14 werden durch Kupfertief-, Flexo-, Sieb- oder Offsetdruck aufgebracht.

Die in den verschiedenen Ausführungsbeispielen in Fig. 2 bis 5 gezeigten Materialien weisen folgende Materialcharakteristika auf:
**1. PMMA: Polymethylmetacrylat**
   - Schlagzähmodifiergehalt: 0-30 Gew. %, vorzugsweise 0-15%
   - Zug E-Modul nach ISO 527; 1800-3400 MPa vorzugsweise 2500-3300 MPa
   - Vicat Erweichungstemperatur, °C, ISO 306 (50°C/h 50N); 90-109°C vorzugsweise 100-109°C
**2. ABS: Acrylnitril ― Butadien - Styrol Copolymer**
   - Schmelzfließrate MFR (ISO 1133 (220°C/10kg) in g/10 min, 3,5 bis 8 vorzugsweise 4,0 bis 6,5
   - Zug E-Modul nach ISO 527, 1400-2300 MPa
   - Vicat Erweichungstemperatur, °C, ISO 306 (50°C/h 50N), 90-103 °C vorzugsweise 99-101°C
**3. HIPS: Polystrol impactmodifiziert (hochschlagfest)**
   - Schmelzfließrate MFR (ISO 1133 (220°C/10kg)) in g/10 min: 3,5 bis 6,5
   - Zug E-Modul nach ISO 527, 1100-2100 MPa
   - Acrylnitrilanteil von 4-12%
   - Vicat Erweichungstemperatur, °C, ISO 306 (50°C/h), 82-93°C vorzugsweise 90-93°C
**4. Amorphes Polyester Copolymer:**
   - Zug E-Modul nach ISO 527,1600-2400 MPa
   - Vicat Erweichungstemperatur, °C, ISO 306; 80-90°C vorzugsweise 85°C

## Patentansprüche

1. Mehrschichtige im wesentlichen polyvinylchlorid- und polyolefinfreie Verbundfolie, insbesondere Möbelfolie, mit mindestens einer Trägerschicht, welche ABS, insbesondere ABS mit Zumischungen, und/oder Polystyrol, insbesondere Polystyrol mit Zumischungen und/oder hochschlagfestes Polystyrol, und/oder Polyester, insbesondere amorphes Polyester Copolymer aufweist, **dadurch gekennzeichnet, daß** die Trägerschicht (2, 3, 5, 10, 11, 12) ein unter einer Deckschicht (1, 6, 7, 8, 9) angeordnetes, mindestens zweischichtiges Coextrudat ist und daß bei der einachsigen Zugprüfung eines aus der Verbundfolie bestehenden Prüfkörpers (21) eine maximale Zugkraft zwischen 30 Newton und 280 Newton auftritt, wobei die einachsige Zugprüfung folgender Prüfvorschrift genügt (Fig. 1):
a) Der Prüfkörper (21) gemäß Typ 1 B nach ISO 527-2: 1996 Abschnitt 6 mit einer Dicke, welche der Dicke der zu prüfenden Verbundfolie entspricht, wird vor Prüfbeginn 24 h bei 23°C und 50% relativer Luftfeuchte gelagert;
b) anschließend erfolgt die Einspannung, des so vorbehandelten Prüfkörpers (21) in ein Prüfgerät nach ISO 527-1:1996 Abschnitt 5, wobei die Längsachse des Prüfkörpers (21) parallel zur Extrusions- oder Kalandrierrichtung der Verbundfolie liegt, sowie das Aufbringen der Vorspannung nach ISO 527-1:1996 Abschnitt 9.2 und 9.5;
c) die anschließende Durchführung des einachsigen Zugversuchs erfolgt nach ISO 527-1:1996 mit einer konstanten Prüfgeschwindigkeit von 800 mm/min und bei einer konstanten Temperatur von 80°C, wobei zeitlich unmittelbar vor dem Beginn der Durchführung der Zugprüfung der eingespannte Prüfkörper (21) in einer auf 80°C temperierten Klimakammer für einen Zeitraum von 10 Minuten verweilt,
d) während der Durchführung des Zugversuches erfolgt die Aufzeichnung der auftretenden Zugkräfte in Abhängigkeit der Prüfzeit ab Beginn der Prüfung in einem Bereich der nominellen Dehnung εₜ (nach ISO 527-1:1996 Abschnitt 10.2) zwischen 0% und 100%.

2. Verbundfolie nach Anspruch 1, **dadurch gekennzeichnet, daß** die Trägerschicht (2,3,5,10,11,12) der Verbundfolie eine Stärke von 100 bis 1000 µm aufweist.

3. Verbundfolie nach Anspruch 1, **dadurch gekennzeichnet, daß** sie mindestens eine Trägerschicht (2,3,5,10,11,12) mit amorphem Polyester Copolymer aufweist wobei bei der einachsigen Zugprüfung einer solchen Verbundfolie eine maximale Zugkraft zwischen 50 Newton und 120 Newton, vorzugsweise zwischen 65 Newton und 105 Newton auftritt.

4. Verbundfolie nach Anspruch 3, **dadurch gekennzeichnet, daß** sie eine Stärke von 200 bis 600 µm vorzugsweise von 300 bis 450 µm aufweist.

5. Verbundfolie nach Anspruch 1, **dadurch gekennzeichnet, daß** sie mindestens eine Trägerschicht (2,3,5,10,11,12) mit ABS und/oder Polystyrol, vorzugsweise HIPS aufweist wobei bei der einachsigen Zugprüfung einer solchen Verbundfolie eine maximale Zugkraft zwischen 50 Newton und 230 Newton, vorzugsweise zwischen 105 Newton und 230 Newton, auftritt.

6. Verbundfolie nach Anspruch 5, **dadurch gekennzeichnet, daß** bei der Zugprüfung einer solchen Verbundfolie eine maximale Zugkraft zwischen 105 Newton und 180 Newton auftritt.

7. Verbundfolie nach Anspruch 5 oder 6, **dadurch gekennzeichnet, daß** sie eine Stärke von 400 bis 1000 µm, vorzugsweise von 600 bis 800 µm, aufweist.

8. Mehrschichtige im wesentlichen polyvinylchlorid- und polyolefinfreie Verbundfolie, insbesondere Möbeifolie, welche mindestens eine Trägerschicht aus ABS, insbesondere ABS mit Zumischungen, und/oder Polystyrol, insbesondere Polystyrol mit Zumischungen und/oder hochschlagfestem Polystyrol, und/oder Polyester, insbesondere amorphem Polyester Copolymer, aufweist, insbesondere nach einem der Ansprüche 1 bis 7, **dadurch gekennzeichnet, daß** die Verbundfolie unter einer Deckschicht (1,6,7,8,9) ein mindestens zweischichtiges Coextrudat als Trägerschicht (2,3,5,10,11,12) aufweist und daß die Trägerschicht (2, 3, 5, 10, 11, 12) der Verbundfolie eine Stärke von 100 bis 1000 µm aufweist.

9. Verbundfolie nach Anspruch 8, **dadurch gekennzeichnet, daß** mindestens eine Schicht der Verbundfolie UV-Stabilisatoren und/oder UV-Absorber und/oder Pigmente -vorzugsweise zur Einfärbung und in einem Volumenanteil zwischen 0,1 und 10 % -aufweisen.

10. Verbundfolie nach einem der Ansprüche 8 oder 9, **dadurch gekennzeichnet, daß** die Trägerschicht (2,3,5,10,11,12) und/oder mindestens eine Schicht der Trägerschicht (2,3,5,10,11,12) Additive zur Vicatemiedrigung mit einem Gewichtsanteil von 1 bis 70 % aufweisen.

11. Verbundfolie nach einem der Ansprüche 8 bis 10, **dadurch gekennzeichnet, daß** die Trägerschicht (2,3,5,10,11,12) und/oder mindestens eine Schicht der Trägerschicht (2,3,5,10,11,12) Polycaprolacton in einem Gewichtsanteil von 0,5 bis 15% aufweisen.

12. Verbundfolie nach einem der Ansprüche 8 bis 11, **dadurch gekennzeichnet, daß** die Trägerschicht (2,3,5,10,11,12) und/oder mindestens eine Schicht der Trägerschicht (2,3,5,10,11,12) amorphes Polyester Copolymer in einem Gewichtsanteil von 30 bis 70% aufweisen.

13. Verbundfolie nach einem der Ansprüche 8 bis 12, **dadurch gekennzeichnet, daß** die Trägerschicht (2,3,5,10,11,12) im Fall eines mehrschichtigen vorzugsweise zweischichtigen Aufbaus des Coextrudats der Trägerschicht (2,3,5,10,11,12) in mindestens einer - vorzugsweise von der Deckschicht (1,6,7,8,9) wegweisenden - Schicht Recyclat (3) aus dem laufenden Produktionsprozeß aufweist.

14. Verbundfolie nach einem der Ansprüche 8 bis 13, **dadurch gekennzeichnet, daß** auf die der Deckschicht (1,6,7,8,9) der Verbundfolie gegenüberliegende Trägerschichtseite eine Primerschicht (4) aufgebracht ist.

15. Verbundfolie nach einem der Ansprüche 8 bis 14, **dadurch gekennzeichnet, daß** im Falle ihres einschichtigen Aufbaus die Trägerschicht (2,3,5,10,11,12) eine Stärke zwischen 94 und 98 % der Gesamtstärke der Verbundfolie aufweist.

16. Verbundfolie nach einem der Ansprüche 8 bis 15, **dadurch gekennzeichnet, daß** die Deckschicht der Verbundfolie mit der Trägerschicht (2,3) zusammen coextrudiert wird und PMMA oder schlagzähmodifiziertes PMMA aufweist.

17. Verbundfolie nach einem der Ansprüche 8 bis 16, **dadurch gekennzeichnet, daß** die Verbundfolie eine Gesamtstärke von 500 bis 1000 µm, vorzugsweise von 500 bis 800 µm, aufweist.

18. Verbundfolie nach einem der Ansprüche 8 bis 17, **dadurch gekennzeichnet, daß** die Deckschicht (1) der Verbundfolie eine Schichtstärke zwischen 1 und 5 %, - vorzugsweise im Intervall von 3 bis 4 % - der Gesamtstärke der Verbundfolie aufweist.

19. Verbundfolie nach einem der Ansprüctie 8 bis 14 oder 16 bis 18, **dadurch gekennzeichnet, daß** im Fall einer zweischichtigen Trägerschicht (2, 3) deren erste Schicht (2) eine Stärke zwischen 5 und 20 % - vorzugsweise zwischen 10 und 15 % - der Gesamtstärke der Verbundfolie sowie die zweite Schicht (3) der Trägerschicht eine Stärke zwischen 74 und 93 % - vorzugsweise zwischen 75 und 85 % - der Gesamtstärke der Verbundfolie aufweist (Fig. 2).

20. Verbundfolie nach einem der Ansprüche 8 bis 15, **dadurch gekennzeichnet, daß** als Deckschicht (1) eine transparente Kratzfestbeschichtung der Trägerschicht (2,3) auflaminiert oder per Thermotransferdruck aufgebracht ist.

21. Verbundfolie nach Anspruch 20, **dadurch gekennzeichnet, daß** die Verbundfolie eine Gesamtstärke von 200 bis 600 µm, vorzugsweise von 300 bis 450 µm ,aufweist.

22. Verbundfolie nach einem der Ansprüche 20 oder 21, **dadurch gekennzeichnet, daß** die Deckschicht (1) der Verbundfolie eine Schichtstärke zwischen 1 und 5 % - vorzugsweise zwischen 1 und 3 % - der Gesamtstärke der Verbundfolie aufweist.

23. Verbundfolie nach einem der Ansprüche 20 bis 22, **dadurch gekennzeichnet, daß** im Falle einer zweischichtigen Trägerschicht (2,3) deren erste Schicht (2) eine Stärke zwischen 20 und 40 % - vorzugsweise zwischen 25 und 35% - der Gesamtstärke der Verbundfolie sowie die zweite Schicht (3) der Trägerschicht eine Stärke zwischen 60 und 75 % - vorzugsweise zwischen 65 und 70 % - der Gesamtstärke der Verbundfolie aufweist.

24. Verbundfolie nach einem der Ansprüche 8 bis 15, **dadurch gekennzeichnet, daß** als Deckschicht (1) auf die Trägerschicht (2,3) eine transparente Kratzfestbeschichtung durch Bedrucken oder Lackieren aufgebracht ist.

25. Verbundfolie nach Anspruch 24, **dadurch gekennzeichnet, daß** die Verbundfolie eine Gesamtstärke von 200 bis 600 µm vorzugsweise von 300 bis 450 µm aufweist.

26. Verbundfolie nach einem der Ansprüche 24 oder 25, **dadurch gekennzeichnet, daß** die Deckschicht (1) der Verbundfolie eine Schichtstärke zwischen 1 und 5 % - vorzugsweise zwischen 1 und 3 % - der Gesamtstärke der Verbundfolie aufweist.

27. Verbundfolie nach einem der Ansprüche 24 bis 26, **dadurch gekennzeichnet, daß** im Fall einer zweischichtigen Trägerschicht (2,3) deren erste Schicht (2) eine Stärke zwischen 20 und 40 % - vorzugsweise zwischen 25 und 35 % - der Gesamtstärke der Verbundfolie sowie die zweite Schicht (3) der Trägerschicht eine Stärke zwischen 60 und 75 % - vorzugsweise zwischen 65 und 70 % - der Gesamtstärke der Verbundfolie aufweist.

28. Verbundfolie nach einem der Ansprüche 8 bis 27, **dadurch gekennzeichnet, daß** die Trägerschicht (2,3,5) eine zur Primerschicht weisende zusätzliche coextrudierte Schicht (5), vorzugsweise aus amorphen Polyester Copolymer mit Antiblocking Additiv, aufweist (Fig. 3).

29. Verbundfolie nach einem der Ansprüche 8 bis 14, **dadurch gekennzeichnet, daß** die Deckschicht (6,7,8,9) mehrschichtig aufgebaut ist und als fertiges Vorprodukt auf die Trägerschicht (2,3) auflaminiert ist (Fig. 4).

30. Verbundfolie nach Anspruch 29, **dadurch gekennzeichnet, daß** die Deckschicht vier Schichten (6,7,8,9) aufweist, wobei die erste Schicht (6) eine transparente Kratzfestbeschichtung - vorzugsweise mit UV Stabilisatoren und/oder UV-Absorbem - ,die zweite Schicht (7) eine transparente Overlayfolie, bestehend aus amorphen Polyester Copolymer - vorzugsweise mit UV-Stabilisatoren und/oder UV-Absorbem - , die dritte Schicht (8) eine Dekorschicht und die vierte Schicht (9) eine Primerschicht ist (Fig. 4).

31. Verbundfolie nach Anspruch 29 oder 30, **dadurch gekennzeichnet, daß** die Verbundfolie eine Gesamtstärke von 200 bis 600 µm, vorzugsweise von 300 bis 450 µm, aufweist.

32. Verbundfolie nach einem der Ansprüche 29 bis 31, **dadurch gekennzeichnet, daß** die Deckschicht (6,7,8,9) eine Stärke von 30 bis 40 % - vorzugsweise 33 bis 37 % - der Gesamtstärke der Verbundfolie aufweist.

33. Verbundfolie nach einem der Ansprüche 8 bis 12, **dadurch gekennzeichnet, daß** die der Deckschicht (1) gegenüberliegende Seite der Trägerschicht (10,11,12) mindestens eine Dekorschicht (13) und/oder mindestens eine Farbdeckschicht (14) und/oder mindestens eine Primerschicht (4) aufweist, wobei - vorzugsweise die Deckschicht (1) eine transparente Kratzfestbeschichtung mit UV-Stabilisatoren und/oder UV-Absorbem aufweist - (Fig. 5).

34. Verbundfolie nach Anspruch 33, **dadurch gekennzeichnet, daß** die coextrudierte Trägerschicht (10,11,12) mindestens 80 % - vorzugsweise 95 % - der Gesamtstärke der Verbundfolie aufweist.

35. Verbundfolie nach einem der Ansprüche 33 oder 34, **dadurch gekennzeichnet, daß** die erste Schicht (10) der Trägerschicht chemisch und/oder mechanisch mattiert ist.

36. Verbundfolie nach einem der Ansprüche 33 bis 35, **dadurch gekennzeichnet, daß** die Dekor- (13) und/oder Farbdeckschicht(en) (14) im Kupfertiefdruck und/oder Flexodruck und/oder Siebdruck und/oder Offsetdruck auf die Trägerschicht aufgebracht ist (sind).

37. Verbundfolie nach einem der Ansprüche 33 bis 36, **dadurch gekennzeichnet, daß** die Trägerschicht (10,11,12) transparent ausgebildet ist.

## Claims

1. A multi-layer, substantially polyvinyl chloride- and polyolefin-free composite foil, in particular furniture foil, with at least one carrier layer which comprises ABS, in particular ABS with admixtures, and/or polystyrene, in particular polystyrene with admixtures and/or high-impact polystyrene, and/or polyester, in particular amorphous polyester copolymer, **characterized in that** the carrier layer (2, 3, 5, 10, 11, 12) is an at least double-layer co-extrudate arranged under a cover layer (1, 6, 7, 8, 9) and **in that**, in the single-axis tensile testing of a test body (21) consisting of the composite foil, a maximum tensile force between 30 Newton and 280 Newton occurs, wherein the single-axis tensile testing procedure satisfies the following testing specification (Fig. 1):
a) the test body (21) according to type 1 B as set forth in ISO 527-2: 1996 Section 6 with a thickness which corresponds to the thickness of the composite foil to be tested is stored for 24 hours prior to the beginning of the testing at 23°C and 50 % relative air humidity;
b) the test body (21) pretreated in this way is then clamped into a testing apparatus according to ISO 527-1:1996 Section 5, wherein the longitudinal axis of the test body (21) is parallel to the direction of extrusion or calendring direction of the composite foil, and the prestressing is applied according to ISO 527-1:1996 Section 9.2 and 9.5;
c) subsequent implementation of the single-axis tensile test is effected according to ISO 527-1:1996 at a constant testing speed of 800 mm/min and at a constant temperature of 80°C, wherein immediately prior to the beginning of the implementation of the tensile testing the clamped test body (21) remains in a climatic chamber temperature-controlled at 80°C for a period of 10 minutes,
d) during the implementation of the tensile test a recording of the tensile forces which occur is effected in dependence on the test time from the beginning of the testing procedure in a range of nominal stretch εₜ (according to ISO 527-1:1996 Section 10.2) of between 0 % and 100 %.

2. A composite foil according to claim 1, **characterized in that** the carrier layer (2, 3, 5, 10, 11, 12) of the composite foil is of a thickness of between 100 µm and 1000 µm.

3. A composite foil according to claim 1, **characterized in that** it comprises at least one carrier layer (2, 3, 5, 10, 11, 12) with amorphous polyester copolymer, wherein in the single-axis tensile testing of such a composite foil a maximum tensile force of between 50 Newton and 120 Newton, preferably of between 65 Newton and 105 Newton, occurs.

4. A composite foil according to claim 3, **characterized in that** it is of a thickness of between 200 µm and 600 µm, preferably of between 300 µm and 450 µm.

5. A composite foil according to claim 1, **characterized in that** it comprises at least one carrier layer (2, 3, 5, 10, 11, 12) with ABS and/or polystyrene, preferably HIPS, wherein in the single-axis tensile testing of such a composite foil a maximum tensile force of between 50 Newton and 230 Newton, preferably of between 105 Newton and 230 Newton, occurs.

6. A composite foil according to claim 5, **characterized in that** in the tensile testing of such a composite foil a maximum tensile force of between 105 Newton and 180 Newton occurs.

7. A composite foil according to claim 5 or 6, **characterized in that** it is of a thickness of between 400 µm and 1000 µm, preferably of between 600 µm and 800 µm, occurs.

8. A multi-layer, substantially polyvinyl chloride- and polyolefin-free composite foil, in particular furniture foil, which comprises at least one carrier layer of ABS, in particular ABS with admixtures, and/or polystyrene, in particular polystyrene with admixtures and/or high-impact polystyrene, and/or polyester, in particular amorphous polyester copolymer, in particular according to one of claims 1 to 7, **characterized in that** the composite foil under a cover layer (1, 6, 7, 8. 9) comprises an at least double-layer co-extrudate as a carrier layer (2, 3, 5, 10, 11, 12) and **in that** the carrier layer (2, 3, 5, 10, 11, 12) of the composite foil comprises a thickness of between 100 µm and 1000 µm.

9. A composite foil according to claim 8, **characterized in that** at least one layer of the composite foil comprises UV-stabilisers and/or UV-absorbers and/or pigments, preferably for coloring purposes and in a proportion by volume of between 0.1 % and 10 %.

10. A composite foil according to claims 8 or 9, **characterized in that** the carrier layer (2, 3, 5, 10, 11, 12) and/or at least one layer of the carrier layer (2, 3, 5, 10, 11, 12) comprise additives for vicat reduction with a proportion of weight of between 1 % to 70 %.

11. A composite foil according to one of claims 8 to 10, **characterized in that** the carrier layer (2, 3, 5, 10, 11, 12) and/or at least one layer of the carrier layer (2, 3, 5, 10, 11, 12) comprise polycaprolactone in a proportion of weight of between 0.5 % and 15 %.

12. A composite foil according to one of claims 8 to 11, **characterized in that** the carrier layer (2, 3, 5, 10, 11, 12) and/or at least one layer of the carrier layer (2, 3, 5, 10, 11, 12) comprise amorphous polyester copolymer in a proportion of weight of between 30 % and 70 %.

13. A composite foil according to one of claims 8 to 12, **characterized in that** the carrier layer (2, 3, 5, 10, 11, 12), in the case of a multi-layer, preferably a double-layer, structure of the co-extrudate of the carrier layer (2, 3, 5, 10, 11, 12) in at least one layer - preferably facing away from the cover layer (1, 6, 7, 8, 9) - has recycled material (3) from the ongoing production process.

14. A composite foil according to one of claims 8 to 13, **characterized in that** a primer layer (4) is applied to the side of the carrier layer, which is located opposite of the cover layer (1, 6, 7, 8, 9) of the composite foil.

15. A composite foil according to one of claims 8 to 14, **characterized in that** in the case of the single-layer structure thereof the carrier layer (2, 3, 5, 10, 11, 12) comprises a thickness of between 94 % and 98 % of the overall thickness of the composite foil.

16. A composite foil according to one of claims 8 to 15, **characterized in that** the cover layer of the composite foil is co-extruded together with the carrier layer (2, 3) and comprises PMMA or impact modified PMMA.

17. A composite foil according to one of claims 8 to 16, **characterized in that** the composite foil comprises an overall thickness of between 500 µm and 1000 µm, preferably of between 500 µm and 800 µm.

18. A composite foil according to one of claims 8 to 17, **characterized in that** the cover layer (1) of the composite foil comprises a layer thickness of between 1 % and 5 %, preferably in the range of from 3 % and 4 %, of the overall thickness of the composite foil.

19. A composite foil according to one of claims 8 to 14 or 16 to 18, **characterized in that** in the case of a double-layer carrier layer (2, 3) the first layer (2) thereof comprises a thickness of between 5 % and 20 %, preferably of between 10 % and 15 %, of the overall thickness of the composite foil and the second layer (3) of the carrier layer comprises a thickness of between 74 % and 93 %, preferably of between 75 % and 85 %, of the overall thickness of the composite foil (Fig. 2).

20. A composite foil according to claims 8 and 15, **characterized in that** as the cover layer (1) a transparent scratch-resistant coating is laminated on the carrier layer (2, 3) or applied by thermal transfer printing.

21. A composite foil according to claim 20, **characterized in that** the composite foil comprises an overall thickness of between 200 µm and 600 µm, preferably of between 300 µm and 450 µm.

22. A composite foil according to one of claims 20 or 21, **characterized in that** the cover layer (1) of the composite foil comprises a layer thickness of between 1 % and 5 %, preferably of between 1 % and 3 %, of the overall thickness of the composite foil.

23. A composite foil according to one of claims 20 to 22, **characterized in that** in the case of a double-layer carrier layer (2, 3) the first layer (2) thereof comprises a thickness of between 20 % and 40 %, preferably of 25 % and 35 %, of the overall thickness of the composite foil and the second layer (3) of the carrier layer comprises a thickness of between 60 % and 75 %, preferably of between 65 % and 70 %, of the overall thickness of the composite foil.

24. A composite foil according to one of claims 8 to 15, **characterized in that** as cover layer (1) a transparent scratch-resistant coating is applied to the carrier layer (2, 3) by printing or lacquering.

25. A composite foil according to claim 24, **characterized in that** the composite foil comprises an overall thickness of between 200 µm and 600 µm, preferably of between 300 µm and 450 µm.

26. A composite foil according to one of claims 24 or 25, **characterized in that** the cover layer (1) of the composite foil comprises a layer thickness of between 1 % and 5 %, preferably of between 1 % and 3 %, of the overall thickness of the composite foil.

27. A composite foil according to one of claims 24 to 26, **characterized in that** in the case of a double-layer carrier layer (2, 3) the first layer (2) thereof comprises a thickness of between 20 % and 40 %, preferably of between 25 % and 35 %, of the overall thickness of the composite foil and the second layer (3) of the carrier layer comprises a thickness of between 60 % and 75 %, preferably of between 65 % and 70 %, of the overall thickness of the composite foil.

28. A composite foil according to one of claims 8 to 27, **characterized in that** the carrier layer (2, 3) comprises an additional co-extruded layer (5) facing towards the primer layer, preferably comprising amorphous polyester copolymer with anti-blocking additive (Fig. 3).

29. A composite foil according to one of claims 8 to 14, **characterized in that** the carrier layer (6, 7, 8, 9) is of a multi-layer structure and is laminated as a finished pre-product onto the carrier layer (2, 3) (Fig. 3).

30. A composite foil according to claim 29, **characterized in that** the cover layer comprises four layers (6, 7, 8, 9), wherein the first layer (6) is a transparent scratch-resistant coating, preferably with UV-stabilisers and/or UV-absorbers, the second layer (7) is a transparent overlay foil consisting of amorphous polyester copolymer, preferably with UV-stabilisers and/or UV-absorbers, the third layer (8) is a decorative layer and the fourth layer (9) is a primer layer (Fig. 4).

31. A composite foil according to claim 29 or 30, **characterized in that** the composite foil comprises an overall thickness of between 200 µm and 600 µm, preferably of between 300 µm and 450 µm.

32. A composite foil according to one of claims 29 to 31, **characterized in that** the cover layer (6, 7, 8, 9) comprises a thickness of between 30 % and 40 %, preferably of between 33 % and 37 %, of the overall thickness of the composite foil.

33. A composite foil according to one of claims 8 to 12, **characterized in that** the side of the carrier layer (10, 11, 12), which is opposite of the cover layer (1), comprises at least one decorative layer (13) and/or at least one color cover layer (14) and/or at least one primer layer (4), wherein preferably the cover layer (1) comprises transparent scratch-resistant coating with UV-stabilisers and/or UV-absorbers (Fig. 5).

34. A composite foil according to claim 33, **characterized in that** the co-extruded carrier layer (10, 11, 12) comprises at least 80 %, preferably of 95 %, of the overall thickness of the composite foil.

35. A composite foil according to one of claims 33 or 34, **characterized in that** the first layer (10) of the carrier layer is chemically and/or mechanically matted.

36. A composite foil according to one of claims 33 to 35, **characterized in that** the decorative (13) and/or color cover layer(s) (14) is (are) applied to the carrier layer by copper intaglio printing and/or flexographic printing and/or screen printing and/or offset printing.

37. A composite foil according to one of claims 33 to 36, **characterized in that** the carrier layer (10, 11, 12) is transparent.

## Revendications

1. Feuille composite multicouche, sensiblement exempte de polychlorure de vinyle et de polyoléfine, en particulier feuille d'ameublement, ayant au moins une couche support qui présente de l'ABS, en particulier de l'ABS avec des additifs, et/ou du polystyrol, en particulier du polystyrol avec des additifs et/ou du polystyrol très résistant aux chocs, et/ou du polyester, en particulier du copolymère de polyester amorphe, **caractérisée en ce que** la couche support (2, 3, 5, 10, 11, 12) est un coextrudat au moins bicouche, disposé sous un revêtement (1, 6, 7, 8, 9) et **en ce qu'**une force de traction maximale entre 30 Newton et 280 Newton apparaît pendant l'essai de traction uniaxial d'un échantillon (21) se composant de la feuille composite, les instructions d'essai suivantes étant suffisantes pour l'essai de traction uniaxial (Fig. 1) :
a) l'échantillon (21) conformément au type 1 B selon le document ISO 527-2:1996 paragraphe 6 ayant une épaisseur qui correspond à l'épaisseur de la feuille composite à tester, est maintenu avant le commencement de l'essai à 23°C et à une humidité relative de 50 % pendant 24 heures ;
b) ensuite on effectue la fixation de l'échantillon (21) ainsi traité préalablement dans un dispositif d'essai selon le document ISO 527-1:1996 paragraphe 5, l'axe longitudinal de l'échantillon (21) se trouvant parallèle à la direction d'extrusion ou de calandrage de la feuille composite, ainsi que l'introduction de la précontrainte selon le document ISO 527-1:1996 paragraphes 9.2 et 9.5 ;
c) l'exécution suivante de l'essai de traction uniaxial se réalise selon le document ISO 527-1:1996 avec une vitesse d'essai constante de 800 mm/min et à une température constante de 80°C, l'échantillon fixé (21) séjournant pendant une période de temps de 10 minutes dans une enceinte climatique tempérée à 80°C immédiatement avant le commencement de l'exécution de l'essai de traction,
d) pendant l'exécution de l'essai de traction, l'enregistrement des forces de traction qui apparaissent, se produit en fonction du temps d'essai à partir du commencement de l'essai dans un domaine de déformation nominale εₜ (selon le document ISO 527-1:1996 paragraphe 10.2) entre 0% et 100%.

2. Feuille composite selon la revendication 1, **caractérisée en ce que** la couche support (2, 3, 5, 10, 11, 12) de la feuille composite présente une épaisseur de 100 à 1000 µm.

3. Feuille composite selon la revendication 1, **caractérisée en ce qu'**elle présente au moins une couche support (2, 3, 5, 10, 11, 12) ayant du copolymère de polyester amorphe, une force de traction maximale entre 50 Newton et 120 Newton, de préférence entre 65 Newton et 105 Newton, apparaissant pendant l'essai de traction uniaxial d'une telle feuille composite.

4. Feuille composite selon la revendication 3, **caractérisée en ce qu'**elle présente une épaisseur de 200 à 600 µm, de préférence de 300 à 450 µm.

5. Feuille composite selon la revendication 1, **caractérisée en ce qu'**elle présente au moins une couche support (2, 3, 5, 10, 11, 12) ayant de l'ABS et/ou du polystyrène, de préférence de l'HIPS, une force de traction maximale entre 50 Newton et 230 Newton, de préférence entre 105 Newton et 230 Newton, apparaissant pendant l'essai de traction uniaxial d'une telle feuille composite.

6. Feuille composite selon la revendication 5, **caractérisée en ce qu'**une force de traction maximale entre 105 Newton et 180 Newton apparaît pendant l'essai de traction d'une telle feuille composite.

7. Feuille composite selon la revendication 5 ou 6, **caractérisée en ce qu'**elle présente une épaisseur de 400 à 1000 µm, de préférence de 600 à 800 µm.

8. Feuille composite multicouche, sensiblement exempte de polychlorure de vinyle et de polyoléfine, en particulier feuille d'ameublement, qui présente au moins une couche support en ABS, en particulier en ABS avec des additifs, et/ou en polystyrol, en particulier en polystyrol avec des additifs et/ou en polystyrol très résistant aux chocs, et/ou en polyester, en particulier en copolymère de polyester amorphe, en particulier selon l'une des revendications 1 à 7, **caractérisée en ce que** la feuille composite présente sous un revêtement (1, 6, 7, 8, 9) un coextrudat au moins bicouche en tant que couche support (2, 3, 5, 10, 11, 12) et **en ce que** la couche support (2, 3, 5, 10, 11, 12) de la feuille composite présente une épaisseur de 100 à 1000 µm.

9. Feuille composite selon la revendication 8, **caractérisée en ce qu'**au moins une couche de la feuille composite présente des stabilisants d'UV et/ou des absorbeurs d'UV et/ou des pigments - de préférence pour coloration et dans une proportion volumique entre 0,1 et 10%.

10. Feuille composite selon l'une des revendications 8 ou 9, **caractérisée en ce que** la couche support (2, 3, 5, 10, 11, 12) et/ou au moins une couche de la couche support (2, 3, 5, 10, 11, 12) présentent des additifs pour réduire le point Vicat dans une proportion de 1 à 70%.

11. Feuille composite selon l'une des revendications 8 à 10, **caractérisée en ce que** la couche support (2, 3, 5, 10, 11, 12) et/ou au moins une couche de la couche support (2, 3, 5, 10, 11, 12) présentent du polycaprolactone dans une proportion pondérale de 0,5 à 15%.

12. Feuille composite selon l'une des revendications 8 à 11, **caractérisée en ce que** la couche support (2, 3, 5, 10, 11, 12) et/ou au moins une couche de la couche support (2, 3, 5, 10, 11, 12) présentent du copolymère de polyester amorphe dans une proportion pondérale de 30 à 70%.

13. Feuille composite selon l'une des revendications 8 à 12, **caractérisée en ce que** la couche support (2, 3, 5, 10, 11, 12) dans le cas d'une formation multicouche, de préférence bicouche, du coextrudat de la couche support (2, 3, 5, 10, 11, 12) présente du recyclât (3) du procédé de production en cours dans au moins une couche - de préférence éloignée de la couche de revêtement (1, 6, 7, 8, 9).

14. Feuille composite selon l'une des revendications 8 à 13, **caractérisée en ce qu'**une couche d'amorce (4) est introduite sur le côté de la couche support faisant face à la couche de revêtement (1, 6, 7, 8, 9) de feuille composite.

15. Feuille composite selon l'une des revendications 8 à 14, **caractérisée en ce que** la couche support (2, 3, 5, 10, 11, 12) dans le cas de sa formation monocouche présente une épaisseur entre 94 et 98 % de l'épaisseur totale de la feuille composite.

16. Feuille composite selon l'une des revendications 8 à 15, **caractérisée en ce que** la couche de revêtement de la feuille composite est coextrudée conjointement avec la couche support (2, 3) et présente du PMMA ou du PMMA modifié à résistance élevée aux chocs.

17. Feuille composite selon l'une des revendications 8 à 16, **caractérisée en ce que** la feuille composite présente une épaisseur totale de 500 à 1000 µm, de préférence de 500 à 800 µm.

18. Feuille composite selon l'une des revendications 8 à 17, **caractérisée en ce que** la couche de revêtement (1) de la feuille composite présente une épaisseur de couche entre 1 et 5%, - de préférence dans l'intervalle de 3 à 4% - de l'épaisseur totale de la feuille composite.

19. Feuille composite selon l'une des revendications 8 à 14 ou 16 à 18, **caractérisée en ce que**, dans le cas d'une couche support bicouche (2,3), sa première couche (2) présente une épaisseur entre 5 et 20% - de préférence entre 10 et 15% - de l'épaisseur totale de la feuille composite et aussi **en ce que** la seconde couche (3) de la couche support présente une épaisseur entre 74 et 93% - de préférence entre 75 et 85% - de l'épaisseur totale de la feuille composite (Fig. 2).

20. Feuille composite selon l'une des revendications 8 à 15, **caractérisée en ce qu'**un revêtement transparent, résistant au raclage de la couche support (2, 3) est laminé ou est apposée par impression par transfert thermique en tant que couche de revêtement (1).

21. Feuille composite selon la revendication 20, **caractérisée en ce que** la feuille composite présente une épaisseur totale de 200 à 600 µm, de préférence de 300 à 450 µm.

22. Feuille composite selon l'une des revendications 20 ou 21, **caractérisée en ce que** la couche de revêtement (1) de la feuille composite présente une épaisseur de couche entre 1 et 5% - de préférence entre 1 et 3% - de l'épaisseur totale de la feuille composite.

23. Feuille composite selon l'une des revendications 20 à 22, **caractérisée en ce que**, dans le cas d'une couche support bicouche (2,3), sa première couche (2) présente une épaisseur entre 20 et 40% - de préférence entre 25 et 35% - de l'épaisseur totale de la feuille composite et aussi **en ce que** la seconde couche (3) de la couche support présente une épaisseur entre 60 et 75% - de préférence entre 65 et 70% - de l'épaisseur totale de la feuille composite.

24. Feuille composite selon l'une des revendications 8 à 15, **caractérisée en ce qu'**un revêtement transparent, résistant au raclage est apposé par impression ou par vernissage sur la couche support (2, 3) en tant que couche de revêtement (1).

25. Feuille composite selon la revendication 24, **caractérisée en ce que** la feuille composite présente une épaisseur totale de 200 à 600 µm, de préférence de 300 à 450 µm.

26. Feuille composite selon l'une des revendications 24 ou 25, **caractérisée en ce que** la couche de revêtement (1) de la feuille composite présente une épaisseur de couche entre 1 et 5%, - de préférence entre 1 et 3% - de l'épaisseur totale de la feuille composite.

27. Feuille composite selon l'une des revendications 24 à 26, **caractérisée en ce que**, dans le cas d'une couche support bicouche (2,3), sa première couche (2) présente une épaisseur entre 20 et 40% - de préférence entre 25 et 35% - de l'épaisseur totale de la feuille composite et aussi **en ce que** la seconde couche (3) de la couche support présente une épaisseur entre 60 et 75% - de préférence entre 65 et 70% - de l'épaisseur totale de la feuille composite.

28. Feuille composite selon l'une des revendications 8 à 27, **caractérisée en ce que** la couche support (2, 3, 5) présente une couche coextrudée (5) supplémentaire tournée vers la couche d'amorce, de préférence en copolymère de polyester amorphe avec de l'additif antiadhérent (Fig. 3).

29. Feuille composite selon l'une des revendications 8 à 14, **caractérisée en ce que** la couche de revêtement (6, 7, 8, 9) est formée de manière multicouche et est laminée en tant que préproduit fini sur la couche support (2,3) (Fig. 4).

30. Feuille composite selon la revendication 29, **caractérisée en ce que** la couche de revêtement présente quatre couches (6, 7, 8, 9), la première couche (6) étant un revêtement transparent, résistant au raclage - de préférence avec des stabilisants d'UV et/ou des absorbeurs d'UV -, la deuxième couche (7) étant une feuille de recouvrement transparente, se composant de copolymère de polyester amorphe - de préférence avec des stabilisants d'UV et/ou des absorbeurs d'UV -, la troisième couche (8) étant une couche de décoration et la quatrième couche (9) étant une couche d'amorce (Fig. 4).

31. Feuille composite selon la revendication 29 ou 30, **caractérisée en ce que** la feuille composite présente une épaisseur totale de 200 à 600 µm, de préférence de 300 à 450 µm.

32. Feuille composite selon l'une des revendications 29 à 31, **caractérisée en ce que** la couche de revêtement (6, 7, 8, 9) présente une épaisseur de 30 à 40% - de préférence de 33 à 37% - de l'épaisseur totale de la feuille composite.

33. Feuille composite selon l'une des revendications 8 à 12, **caractérisée en ce que** le côté de la couche support (10, 11, 12) faisant face à la couche de revêtement (1) présente au moins une couche de décoration (13) et/ou au moins une couche de revêtement de couleur (14) et/ou au moins une couche d'amorce (4), où - de préférence, la couche de revêtement (1) présente un revêtement transparent résistant au raclage avec des stabilisants d'UV et/ou des absorbeurs d'UV- (Fig. 5).

34. Feuille composite selon la revendication 33, **caractérisée en ce que**, la couche support coextrudée (10, 11, 12) présente au moins 80% - de préférence 95% - de l'épaisseur totale de la feuille composite.

35. Feuille composite selon l'une des revendications 33 ou 34, **caractérisée en ce que** la première couche (10) de la couche support est rendue mate chimiquement et/ou mécaniquement.

36. Feuille composite selon l'une des revendications 33 à 35, **caractérisée en ce que** la (les) couche(s) de décoration (13) et/ou de revêtement de couleur (14) est (sont) introduite(s) en rotogravure et/ou flexographie et/ou sérigraphie et/ou impression offset sur la couche support.

37. Feuille composite selon l'une des revendications 33 à 36, **caractérisée en ce que** la couche support (10, 11, 12) est façonnée de manière transparente.
